# EUROPÄISCHE PATENTSCHRIFT

(11) **EP 1 683 988 B1**
(45) Veröffentlichungstag und Bekanntmachung des Hinweises auf die Patenterteilung: **05.05.2010**
(21) Anmeldenummer: 05025148.7
(22) Anmeldetag: 17.11.2005
(51) Int. Cl.: F16F 13/14

(54) **Hydrobuchse**
Hydraulically damped bushing
Manchon à amortissement hydraulique

(30) Priorität: 22.01.2005 DE 102005003052
(43) Veröffentlichungstag der Anmeldung: 26.07.2006
(73) Patentinhaber: Carl Freudenberg KG, 69469 Weinheim (DE)
(72) Erfinder: Beckmann, Wolfgang, 60389 Frankfurt (DE); Bernert, Reinhold, 69519 Gorxheimertal (DE); Farrenkopf, Peter, 68519 Viernheim (DE); Langlotz, Heike, 68809 Neulußheim (DE); Holz, Roland, 64638 Fürth (DE)

(56) Entgegenhaltungen:
- EP-A- 0 823 568
- DE-C1- 4 242 080
- US-A- 6 102 380
- US-B1- 6 308 941
- PATENT ABSTRACTS OF JAPAN Bd. 013, Nr. 489 (M-888), 7. November 1989 (1989-11-07) -& JP 01 193431 A (KINUGAWA RUBBER IND CO LTD), 3. August 1989 (1989-08-03)

## Beschreibung

### Technisches Gebiet

Die Erfindung betrifft eine Hydrobuchse.

Hydrobuchsen sind allgemein bekannt.

Aus der JP-A-1193431 ist eine Hydrobuchse mit den Merkmalen des Oberbegriffs des Anspruchs 1 bekannt, die auf zwei Tilger abgestimmt werden kann. Die vorbekannte Hydrobuchse weist eine Tragfeder und Kammerwände auf, die durch die Bewegung zwischen dem inneren Stützkörper und dem äußeren Stützkörper mechanisch bewegt werden und dadurch Druck erzeugen.

Die vorbekannte Hydrobuchse weist zwei in sich geschlossene Systeme auf, die parallel so nebeneinander aufgebaut sind, dass die Tragfeder dreiteilig ausgebildet ist und jedes System über je einen eigenen Kanal arbeitet, der auf seine Tilgerfrequenz abgestimmt ist.

Eine hydraulische Querverbindung der beiden Systeme ist nicht vorgesehen. Die Parallelschaltung der beiden in sich geschlossenen parallel geschalteten hydraulischen Systeme hat den Nachteil der dynamischen Verhärtung der Hydrobuchse während der bestimmungsgemäßen Verwendung und daraus resultierend eine Verschlechterung der akustischen Eigenschaften.

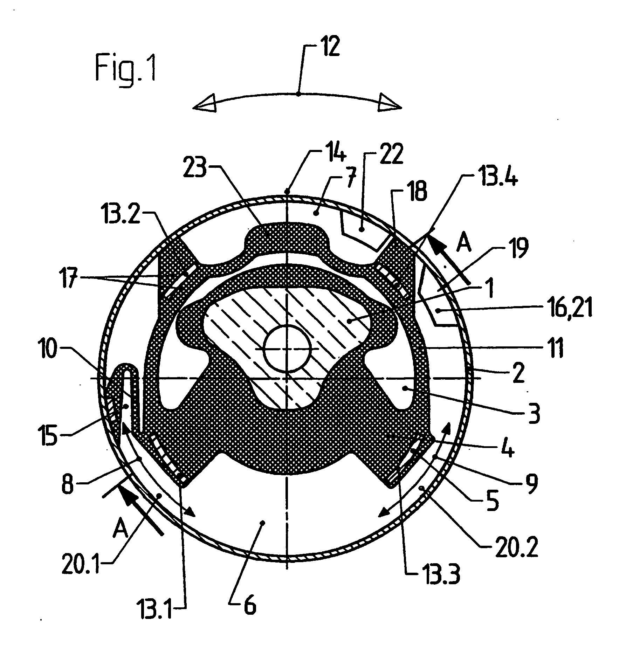

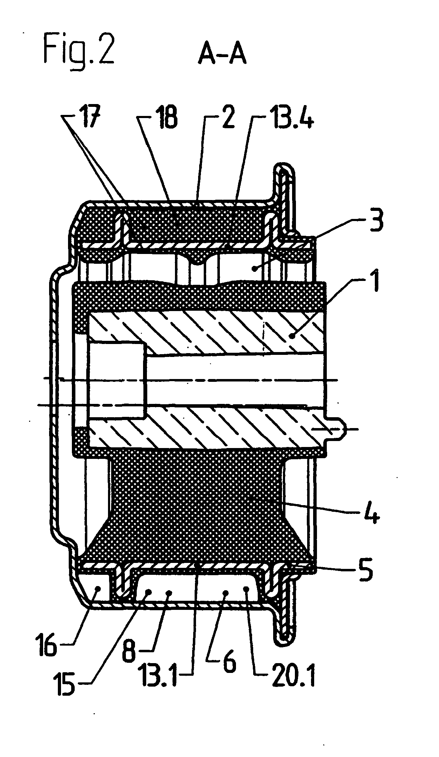

Aus der EP 0 823 568 A2 ist eine Hydrobuchse bekannt, mit einer Arbeitskammer, die durch ein Entkopplungssystem in zwei Kammern geteilt ist, wobei von einer Kammer Kanäle zu Ausgleichsräumen führen. Dieses ist der Aufbau eines klassischen Hydrolagers mit geteiltem Ausgleichsraum und zwischengeschalteten Kanälen. Einer der Kanäle ist vergleichsweise kurz gestaltet und kann wie ein Tilger oder ein Dämpfungskanal wirken. In den Figuren 1 und 2 sind Hydrobuchsen gezeigt, die zwei fördernde Kammern aufweisen. Die fördernde Wirkung beruht darauf, dass die Kammerwand fest am inneren Metallteil anvulkanisiert ist und deshalb saugen und drücken kann.

Aus der DE 42 42 080 C1 ist eine Hydrobuchse bekannt, mit zwei flüssigkeitsgefüllten Kammern, die durch einen Drosselkanal strömungsleitend miteinander verbunden sind. Der Drosselkanal wird durch ein den Federkörper tragendes Außenblech und den das Außenblech umschließenden Außentopf begrenzt. Die vorbekannte Hydrobuchse arbeitet im Push-/Pull-Bettieb. Eine Ausgleichskammer, die durch eine im Wesentlich drucklos Volumen aufnehmende Membran begrenzt ist, weist die Hydrobuchse nicht auf.

Eine weitere Hydrobuchse ist aus der DE 196 22 248 A1 bekannt. Die vorbekannte Hydrobuchse ist als hydraulisch dämpfende Hülsengummifeder ausgebildet, umfassend einen inneren Stützköper, der von einem äußeren Stützköper mit radialem Abstand umschlossen ist, wobei in dem durch den Abstand gebildeten Spalt ein Federkörper aus elastomerem Werkstoff angeordnet ist, der radial innenseitig mit dem inneren Stützköper verbunden und radial außenseitig mittels eines Stützrings am äußeren Stützköper festgelegt ist. Die vorbekannte Hydrobuchse umfasst eine mit Dämpfungsflüssigkeit gefüllte Arbeitskammer, die mittels eines Dämpfungskanals flüssigkeitsleitend mit einer ebenfalls mit Dämpfungsflüssigkeit gefüllten ersten Ausgleichskammer verbunden ist. Die vorbekannte Hydrobuchse umfasst eine weitere, zweite Ausgleichkammer,
wobei die erste Ausgleichkammer, im Querschnitt betrachtet, durch den äußeren Stützkörper und eine gummielastische Blähwand begrenzt ist und wobei in der ersten Ausgleichkammer die zweite Ausgleichkammer angeordnet ist, die durch einen Verbindungskanal mit der Arbeitskammer verbunden ist.

Bei Einleitung tieffrequenter, großamplitudiger Schwingungen in die Hülsengummifeder wird der innere Stützköper, bezogen auf den äußeren Stützköper, derart radial verlagert, dass durch eine Volumenverkleinerung der Arbeitskammer ein Teil der in der Arbeitskammer enthaltenen Flüssigkeit durch den Dämpfungskanal in die erste Ausgleichkammer gefördert wird. In der ersten Ausgleichkammer wird das aus der Arbeitskammer verdrängte Flüssigkeitsvolumen aufgenommen und bei einer Rückkehr der beiden Stützköper in ihrer Ausgangslage relativ zueinander wieder in die Arbeitskammer abgegeben. Eine Abstimmung der Hülsengummifeder auf tieffrequente, großamplitudige Schwingungen kann durch Variationen der Länge und/oder des Querschnitts des Dämpfungskanals vorgenommen werden.

Zur Isolierung höherfrequenter, kleinamplitudiger Schwingungen erfolgt demgegenüber keine Flüssigkeitsverlagerung von der Arbeitskammer durch den Dämpfungskanal in die Ausgleichskammer, sondern nur eine Schwingungsanregung, der in der zweiten Ausgleichskammer enthaltenen Flüssigkeitsbestandteile, die durch den Verbindungskanal mit der Arbeitskammer verbunden sind.

Die zweite Ausgleichskammer ist zur Verbesserung der Gebrauchseigenschaften der Hülsengummifeder im Leerlaufbetrieb vorgesehen. Im Leerlauf des Fahrzeugs werden Motorvibrationen mit Hilfe einer schwingenden Flüssigkeitssäule derart getilgt, dass sie die dynamische Steifigkeit der Hülsengummifeder durch synchrones Schwingen mit der Anregung reduzieren.

Eine weitere Hydrobuchse, bei der die Wirkung vom Schwingungsdämpfung, Schwingungsisolation und Tilgung von Leerlaufvibrationen besonders gut ausgeprägt ist, ist die schaltbare Hydrobuchse gemäß DE 40 15 528 A1. Zwei mit Flüssigkeit gefüllte Arbeitsräume sind durch elastisch aufblähbare Begrenzungswände begrenzt und durch wenigsten zwei parallel geschaltete Verbindungsöffnungen miteinander verbunden, wobei die Verbindungsöffnungen eine Dämpfungsöffnung umfassen, die durch ein Ventil willkürlich verschließbar ist. Der Betrag der dynamischen Steifigkeit ist bei offenem Ventil und Erreichen der Leerlaufdrehzahl der Verbrennungskraftmaschine kleiner als bei Motorstillstand, wodurch die von der Verbrennungskraftmaschine bei Erreichen der Leerlaufdrehzahl ausgehenden Schüttelbewegungen in ausgezeichneter Weise isoliert werden.

Der Erfindung liegt die Aufgabe zugrunde, eine Hydrobuchse der vorbekannten Art derart weiterzuentwickeln, dass höherfrequente Schwingungen getilgt werden können und dass die Hydrobuchse einfach und kostengünstig herstellbar ist.

Zur Lösung dieser Aufgabe ist eine Hydrobuchse nach Anspruch 1 vorgesehen.

Zusätzlich zu dem hydraulischen System, bestehend aus Arbeitskammer, Ausgleichskammer und flüssigkeitsleitender Verbindung dazwischen, sowie gegebenenfalls einem Leerlauftilger, ist ein weiteres hydraulisches System zur Tilgung höherfrequenter Schwingungen vorgesehen.

Eine solche Hydrobuchse mit einem Gummi-Metall-Teil ist einfach und kostengünstig herstellbar und kann daher auch in kleinen, kostengünstigen Fahrzeugen zur Anwendung gelangen.
Die Hydrobuchse kann durch die beiden zur Anwendung gelangenden Tilger derart abgestimmt sein, dass sie besonders gut geeignet ist, ausgeprägte Brummgeräusche im Innenraum, die bei Verbrennungskraftmaschinen hauptsächlich in einem Drehzahlbereich zwischen 4000 und 6000 min⁻¹ auftreten, wirkungsvoll zu reduzieren. Darüber hinaus werden zusätzlich durch einen als Leerlauftilger ausgebildeten Tilger, besonders bei Dieselmotoren, Schwingungen im Frequenzbereich zwischen 25 und 80 Hz getilgt.
Zusätzlich zu dem üblicher Weise bei Hydrobuchsen vorhandenen hydraulischen System, bestehend aus Arbeitskammer, Ausgleichskammer und Verbindungskanal zwischen diesen sowie einem Leerlauftilger mit vergleichsweise kurzem Kanal, ist bei der erfindungsgemäßen Hydrobuchse ein weiterer Tilger vorgesehen, mit einer Kammerwand, die auf die zu tilgende, höhere Frequenz abgestimmt und flexibel und blähfähig ist.
Der erste hydraulische Tilger ist beispielsweise bevorzugt als Leerlauftilger ausgebildet, der zweite hydraulische Tilger als Hochfrequenztilger. Die Blähfedereigenschaften der Kammerwand des zweiten hydraulischen Tilgers und die Fluidmasse im quasi starren Tilgerkanal des zweiten Tilgers, ergeben ein schwingfähiges System, das auf die kritischen Frequenzen zwischen etwa 130 Hz (das entspricht einer Drehzahl von etwa 4000 min⁻¹ in der zweiten Motorordnung) und 200 Hz (das entspricht einer Drehzahl von 6000 min⁻¹) abgestimmt ist. Der erste hydraulische Tilger kann mit einer weicheren Abstimmung auf Leerlaufdrehzahlen von Dieselmotoren abgestimmt sein, im Bereich zwischen 25 bis 80 Hz.
Die beanspruchte Hydrobuchse kann durch die beiden Tilger besonders gut an die jeweiligen Gegebenheiten des Anwendungsfalles angepasst werden.

Die Kammerwände sind symmetrisch zu einer den inneren Stützköper zentrisch und radial durchschneidenden, gedachten Radialebene angeordnet. Eine solche Hydrobuchse weist einen besonders einfachen und kostengünstigen Aufbau auf und kann daher in großen Stückzahlen hergestellt werden und deshalb in kleinen, kostengünstigen Fahrzeugen zur Anwendung gelangen.

Jeder der Tilger weist zumindest eine schwingfähige Kammerwand und einen Tilgerkanal auf. Der Frequenzbereich der zu tilgenden Schwingung ist abhängig von der elastischen Nachgiebigkeit der Kammerwand.

Die beiden Tilger können bevorzugt in einer funktionstechnischen Parallelschaltung angeordnet sein. Zwei parallel geschaltete Kammern weisen zusammen mit den Tilgerkanälen beispielsweise gleiche Geometrie und gleiche Blähsteifigkeit auf. Daneben ist aber auch denkbar, dass aus geometrischen Gründen anderer Art zwei Kammern unterschiedlich gestaltet werden und auch die blähfähigen Wände sich unterschiedlich verhalten. Dann kann man durch eine auf die Blähfähigkeit der Wände entsprechend abgestimmte Kanäle (hinsichtlich Querschnitt und Länge) eine gleiche Tilgerfrequenz einstellen. Schaltet man zwei solche hydraulische Tilger mit gleicher Tilgerfrequenz parallel, erhöht sich die Tilgerwirkung, d.h. die dynamische Federrate der gesamten Buchse ist niedriger als mit einem Tilger. Niedrigere Federrate bedeutet bessere Eigenschaften der Buchse im Bereich der Akustik und der Absorption von Vibrationen.

Nach einer anderen Ausgestaltung besteht die Möglichkeit, dass die Tilger in einer funktionstechnischen Reihenschaltung angeordnet sind. Reihenschaltungen von Tilgern sind zwar möglich, aber problematisch hinsichtlich Beeinflussungen der Tilger untereinander und dadurch unerwünschten Resonanzen.

Der Stützring kann in Umfangsrichtung verteilte, jeweils mit umfangsseitigem Abstand zueinander benachbart angeordnete, sich jeweils in axialer Richtung erstreckende Sprossen aufweisen, wobei sich jede Kammerwand zwischen in Umfangsrichtung zu einander benachbart angeordneten Sprossen erstreckt und mit diesen verbunden ist. Die Sprossen stabilisieren einerseits den Stützring und andererseits bilden sie Fixpunkte, zwischen denen in Umfangsrichtung die schwingfähige Kammerwand der jeweiligen Tilger angeordnet ist. Die Sprossen können dabei, in Umfangsrichtung der Hydrobuchse betrachtet, eine Ausdehnung aufweisen, die an die jeweils zu tilgenden Frequenzen angepasst sind. Die Ausdehnung einer Sprosse in Umfangsrichtung entspricht dabei der Länge des entsprechenden Tilgerkanals, in dem die Flüssigkeitssäule zur Tilgung der eingeleiteten Schwingungen hin- und her schwingt. Dazu ist es erforderlich, dass die Sprossen im Bereich des jeweiligen Tilgerkanals dem äußeren Stützköper mit radialem Abstand benachbart zugeordnet sind, wobei der jeweilige Tilgerkanal, im Querschnitt der Hydrobuchse betrachtet, radial innenseitig durch eine, gegebenenfalls mit elastomerem Werkstoff ummantelte, Sprosse und radial außenseitig durch den äußeren Stützköper begrenzt ist, oder die elastische Wand eines nicht geblähten und nicht schwingenden Elastomerbereichs zwischen den Sprossen umfassen kann.

Die Kammerwände können sich in Umfangsrichtung mit radialem Abstand im Wesentlichen konzentrisch zum äußeren Stützköper erstrecken. Hinsichtlich einer möglichst effizienten Tilgung von Schwingungen, ist eine derartige Ausgestaltung von Vorteil, weil die Flüssigkeitssäule innerhalb des Tilgerkanals ohne Behinderungen, beispielsweise Verwirbelungen, durch den Tilgerkanal hindurch schwingen kann.

Der erste hydraulische Tilger kann als Leerlauftilger ausgebildet sein. Radial zwischen einer der Sprossen und dem äußeren Stützkörper kann dafür ein sich in Umfangsrichtung erstreckender, im Querschnitt betrachtet schlaufenförmiger Tilgerkanal, der als Leerlauftilgerkanal ausgebildet ist, angeordnet sein. Der schlaufenförmige Leerlauftilgerkanal umfasst dabei einen ersten Teilbereich, der, im Querschnitt der Hydrobuchse betrachtet, durch eine Sprosse des Stützrings, die gegebenenfalls von elastomerem Werkstoff ummantelt ist, und dem äußeren Stützköper begrenzt ist. Daran schließt sich in einem zweiten Teilbereich in Richtung der schwingenden Flüssigkeitssäule eine schlaufenförmige Blähfeder aus elastomerem Werkstoff an. Die zu tilgende Frequenz ist abhängig von der Blähfederrate des schlaufenförmigen Leerlauftilgerkanals und der im Tilgerkanal bewegten Flüssigkeitsmasse.

Die flüssigkeitsleitende Verbindung zwischen Arbeits- und Ausgleichskammer ist als Dämpfungskanal ausgebildet. Eine solche Ausgestaltung ist für gute Dämpfungseigenschaften der Hydrobuchse von Vorteil, da beispielsweise fahrbahnerregte Motorschwingungen dadurch effizient gedämpft werden können.

Der Federkörper und die Kammerwände können einstückig und materialeinheitlich ausgebildet sein. Die Herstellung einer solchen Hydrobuchse ist in fertigungstechnischer und wirtschaftlicher Hinsicht von Vorteil. Nur ein gemeinsamer elastomerer Werkstoff für Federkörper und Kammerwände gelangt zur Anwendung.

Das Material von Federkörper und Kammerwänden kann den inneren Stützköper und den Stützring mit seinen Sprossen, mit Ausnahme der Anschraubstellen, bevorzugt vollständig ummanteln. Hierbei ist von Vorteil, dass einerseits der innere Stützköper und der Stützring, die zumeist aus metallischen Werkstoffen bestehen, vor einer Beaufschlagung mit der Flüssigkeit aus dem Inneren der Hydrobuchse geschützt sind. Andererseits lassen sich dadurch gut und einfach Anschlagpuffer zur Begrenzung extremer Auslenkbewegungen vom inneren und äußeren Stützköper, relativ zueinander, vorsehen. Außerdem ist es durch eine derartige Ausgestaltung entbehrlich, separat hergestellte und in der Hydrobuchse zu montierende Anschlagpuffer vorzusehen. Die Ummantelung kann als Anschlagpuffer vorgesehen sein. Hinsichtlich einer verbesserten Gebrauchsdauer besteht die Möglichkeit, den elastomeren Werkstoff im Bereich seiner Anschlagflächen mit einer Armierung zu versehen, die während der Gebrauchsdauer der Hydrobuchse keinen abrasiven Veränderungen unterliegt.

Die Ummantelung von zumindest einer Sprosse kann ein Schott bilden, zur räumlichen Begrenzung von zumindest einem Tilgerkanal in Umfangsrichtung. Die Hydrobuchse weist dadurch nur eine geringe Anzahl von zu montierenden Einzelteilen auf, was in fertigungstechnischer und wirtschaftlicher Hinsicht von Vorteil ist. Das Schott kann sich am Innenumfang des äußeren Stützköpers durch einen Dichtwulst abstützen.

Der Gegenstand der Erfindung wird nachfolgend anhand der beigefügten Zeichnungen weiter erläutert. Diese zeigen jeweils in schematischer Darstellung:
- Fig. 1: ein erstes Ausführungsbeispiel einer Hydrobuchse mit hydraulischer Dämpfung und jeweils einem hydraulischen Tilger für Leerlaufentkopplung und Hochfrequenztilgung,
- Fig. 2: einen Längsschnitt durch die Hydrobuchse aus Fig. 1, entlang der Linie A-A,
- Fig. 3: eine Kennlinie der Hydrobuchse aus den Fig. 1 und 2, wobei die dynamische Federrate der Hydrobuchse über der Frequenz aufgetragen ist, wobei die dynamische Federrate als Maß für die Isolationseigenschaften möglichst niedrig liegen soll,
- Fig. 4: ein zweites Ausführungsbeispiel einer Hydrobuchse mit zwei Hochfrequenz-Tilgern, die nicht unter den Wortlaut von Anspruch 1 fällt,
- Fig. 5: eine Kennlinie der Hydrobuchse aus Fig. 4, bei dem die dynamische Federrate über der Frequenz aufgetragen ist,
- Fig. 6: ein drittes Ausführungsbeispiel einer Hydrobuchse, die einen langen Dämpfungskanal und elastische Kammerwände für mehrere hydraulische Schwingungsformen zur Dämpfung und Tilgung aufweist,
- Fig. 7: ein Längsschnitt durch die Hydrobuchse aus Fig. 6, entlang der Linie B-B
- Fig. 8: den Verlauf des Dämpfungskanals aus den Fig. 6 und 7,
- Fig. 9: eine Kennlinie, bei der die dynamische Steifigkeit über der Frequenz aufgetragen ist, wobei in strichpunktierter Linie das Betriebsverhalten einer klassischen Hydrobuchse ohne zweiten Tilger gezeigt ist und mit durchgezogener Linie das Betriebsverhalten der erfindungsgemäßen Hydrobuchse,
- Fig. 10: eine weitere Kennlinie, bei der der Verlustwinkel über der Frequenz aufgetragen ist. Wie in Fig. 9 ist die Kennlinie der klassischen Hydrobuchse gestrichelt, die Kennlinie der erfindungsgemäßen Hydrobuchse demgegenüber mit durchgezogener Linie gezeigt,
- Fig. 11: ein viertes Ausführungsbeispiel der erfindungsgemäßen Hydrobuchse, mit zwei Tilgern, die in einer funktionstechnischen Parallelschaltung angeordnet sind, wahlweise abstimmbar auf Hochfrequenz- oder Leerlaufvibrationstilgung,
- Fig. 12: einen Längsschnitt durch die Hydrobuchse aus Fig. 11, entlang der Linie C-C,
- Fig. 13: ein fünftes Ausführungsbeispiele einer Hydrobuchse mit parallel wirkenden Tilgern und einem langen Dämpfungskanal.

In den Fig. 1 und 2 ist ein erstes Ausführungsbeispiel der erfindungsgemäßen Hydrobuchse gezeigt. Die Hydrobuchse umfasst einen hydraulischen Dämpfer 19 und zwei hydraulische Tilger 8, 9, wobei einer der Tilger 8 zur Tilgung von Motorvibrationen im Leerlauf in einem Frequenzbereich zwischen 25 und 80 Hz vorgesehen ist und der andere Tilger 9 als Hochfrequenztilger zur Tilgung von Motorvibrationen in einem Frequenzbereich zwischen 130 und 200 Hz, was 4000 bis 6000 min⁻¹ entspricht. Die Arbeitskammer 6 ist durch den Federkörper 4 und den äußeren Stützköper 2 begrenzt und treibt in Folge dynamischer Volumenänderungen während der bestimmungsgemäßen Verwendung der Hydrobuchse mehrere hydraulische Schwingungssysteme an. Zur Dämpfung von der Fahrbahn angeregten niederfrequenten Schwingungen, dem sogenannten Stuckern, dient der Dämpfer 19, der durch einen Dämpfungskanal 16 gebildet ist, der sich aus der Arbeitskammer 6 in die Ausgleichskammer 7 erstreckt. Der Dämpfer 19 ist so abgestimmt, dass maximale Dämpfung bei einer Frequenz zwischen 5 und 16 Hz entsteht. Der Dämpfungskanal 16 arbeitet beim Dämpfen phasenverschoben, im Wesentlichen gegenphasig zur Anregung der Schwingung, so dass mechanische Energie über die Hydraulik in Wärme umgesetzt wird. Dämpfung hat generell eine dynamische Verhärtung der Hydrobuchse zur Folge.

Zum Isolierung von Leerlaufvibrationen ist der erste hydraulische Tilger 8 vorgesehen, der einen vergleichsweise kurzen Tilgerkanal 20.1 /Leerlauftilgerkanal 15 umfasst, der, im hier dargestellten Querschnitt betrachtet, schlaufenförmig ausgebildet ist. Der Leerlauftilgerkanal 15 ist so abgestimmt, dass er mit der Anregung der Hydrobuchse gleichphasig schwingt und damit die dynamische Federsteifigkeit im Frequenzbereich zwischen etwa 25 und 80 Hz absenkt. Die Absenkung erfolgt unter die statische Federrate des Federkörpers 4. Damit wird die hydraulische Verhärtung des Dämpfers 19, wie zuvor beschrieben, kompensiert.

Der zweite hydraulische Tilger 9 hat die Aufgabe der Absenkung der dynamischen Federrate im kritischen Bereich hinsichtlich unerwünschter Brumm-Geräusche. Derartige Brumm-Geräusche treten in einem höher frequenten Frequenzbereich zwischen 100 und 200 Hz auf und werden dadurch verhindert, dass der zweite Tilgerkanal 20.2 einen großen Querschnitt hat, wobei die entsprechende Kammerwand 9 zwar schwingfähig, jedoch weitgehend unelastisch ist. Die harte Kammerwand 11 soll sich möglichst wenig bewegen damit im Dämpfungsbereich nicht zuviel gefördertes Fluid-Volumen im zweiten Tilger 9 aufgenommen wird und nicht durch den Dämpfungskanal 16 des Dämpfers 19 fließt. Der zweite Tilger 9 arbeitet gleichphasig mit der Schwingungs-Anregung und reduziert so die dynamische Verhärtung aus den beiden anderen hydraulischen Systemen. Dämpfer 19 und erster Tilger 8. Bezüglich der Elastizität und der Volumenaufnahme ist anzumerken, dass das aufgenommene Volumen nicht als bewegte Masse dem Dämpfungskanal wirksam ist, wenn die Wand 11 oder die Wand 10 durch den Druck des Fluids sehr stark verformt werden. Je weicher die Wände 10, 11, desto geringer ist die Dämpfung des langen Dämpfungskanals 16.

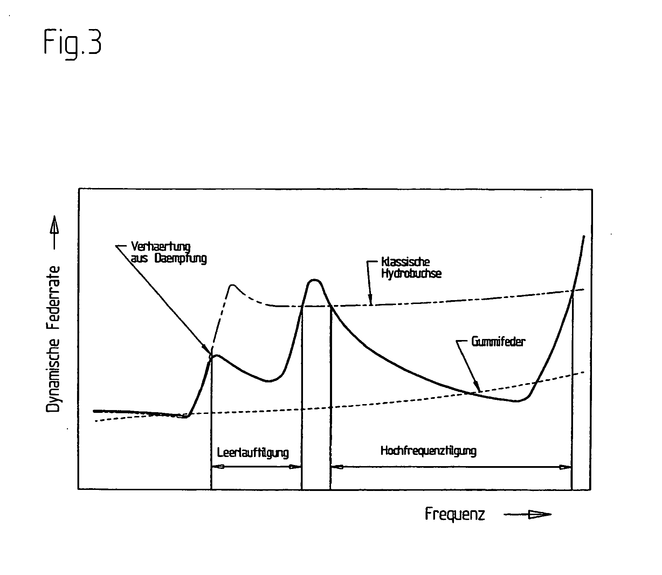

In Fig. 3 ist eine Kennlinie gezeigt, bei der die dynamische Federrate der Hydrobuchse aus den Fig. 1 und 2 über der Frequenz aufgetragen ist. Je niedriger die dynamische Federrate, desto leiser läuft das Fahrzeug, in dem die Hydrobuchse zur Abstützung der Verbrennungskraftmaschine zur Anwendung gelangt.

Die Kennlinie zeigt, dass über der Frequenz die dynamische Federrate an drei Stellen abgesenkt wird. Die erste Absenkung der dynamischen Federrate erfolgt während des Anlassens der Verbrennungskraftmaschine, bevor die Verbrennungskraftmaschine im Leerlauf läuft. Der erste Tilger 8 ist als Leerlauftilger ausgebildet und bewirkt die Absenkung der dynamischen Federrate zwischen etwa 25 und 80 Hz.
Die zweite Absenkung der dynamischen Federrate erfolgt im Hochfrequenzbereich durch den zweiten hydraulischen Tilger 9 im Bereich zwischen 4000 und 6000 min⁻¹, was einem Frequenzbereich von etwa 130 bis 200 Hz entspricht.

Über die zuvor beschriebene Kennlinie wurde zur besseren Verdeutlichung eine Strich-2-punktierte Kennlinie einer klassischen Hydrobuchse gelegt, wobei im Leerlauf die dynamische Federrate bereits wesentlich größer ist als bei der beanspruchten Hydrobuchse und dieses unerwünscht hohe Niveau weitgehend hält.

In den Fig. 1 und 2 ist der Dämpfungskanal 16 durch zwei Kanalöffnungen 21, 22 begrenzt, wobei die erste Kanalöffnung 21 in die Arbeitskammer 6 und zweite Kanalöffnung 22 in die Ausgleichskammer 7 mündet. Auf der der Arbeitskammer 6 radial abgewandten Seite weist die Hydrobuchse einen Ausfederanschlag 23 auf, zur Begrenzung von Extremauslenkungen in radialer Richtung.

Der innere Stützköper 1 wird in den hier gezeigten Ausführungsbeispielen beispielsweise mit einem Motortragarm verbunden; der äußere Stützköper 2 ist demgegenüber mit der Karosserie verbunden.

Um einen Strömungskurzschluss zwischen der Arbeitskammer 6 und der Ausgleichskammer 7 zu verhindern, ist das Schott 18 vorgesehen, wobei das Schott 18, wie in Fig. 1 gezeigt, in Umfangsrichtung 12 zwischen der Ausgleichskammer 7 und dem zweiten Tilgerkanal 20.2 angeordnet ist.

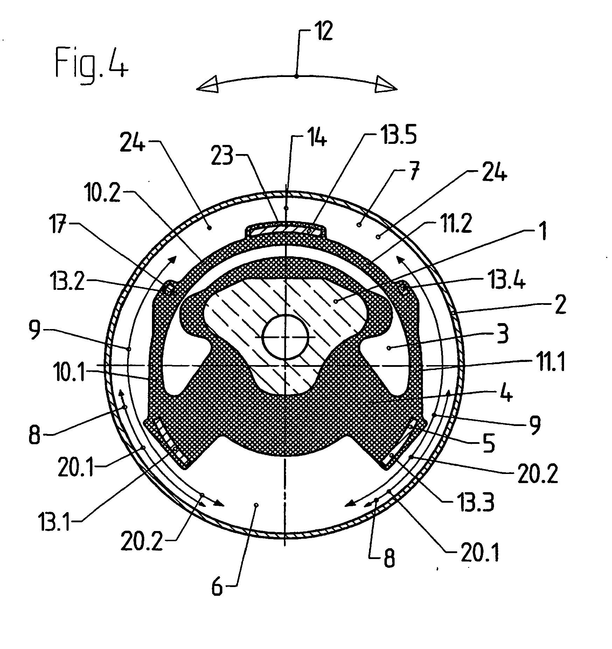

In Fig. 4 ist ein zweites Ausführungsbeispiel einer Hydrobuchse mit Hochfrequenz-Doppeltilger dargestellt, die nicht unter den Wortlaut von Anspruch 1 fällt. Für manche Anwendungsfälle ist eine hydraulische Dämpfung weniger wichtig, als gute Isolationseigenschaften der Hydrobuchse im Drehzahlbereich zwischen 3000 und 6000 min⁻¹, wobei dieser Drehzahlbereich einem Frequenzbereich der Hydrobuchse von etwa 100 bis 200 Hz entspricht. Eine besonders gute entsprechende Tilgerwirkung erzielt man mit zwei Tilgern 8, 9, die in einer funktionstechnischen Parallelschaltung angeordnet sind. Da die hydraulischen Tilger 8, 9, wie alle Tilger, oberhalb ihrer Tilgerfrequenz in der Hydrobuchse unerwünschte dynamische Verhärtungen erzeugen, empfiehlt es sich, im Frequenzband der Verhärtung weitere Tilger zu verwenden, um den Bereich der niedrigen dynamischen Federraten zu höheren Frequenzen hin zu erweitern.

Im hier gezeigten Ausführungsbeispiel wird dazu, ausgehend von der Arbeitskammer 6, außen in der Hydrobuchse umlaufend, nur ein breiter Tilgerkanal 24 vorgesehen, der sich fast vollständig über die gesamte axiale Breite der Hydrobuchse erstreckt. Die Kammerwände 10, 11 der Tilger 8, 9 werden steif ausgeführt und dienen sowohl der Volumenaufnahme der Flüssigkeitsmenge, die die Arbeitskammer 6 während der bestimmungsgemäßen Verwendung der Hydrobuchse verdrängt, wie auch durch seine Blähfeder der Tilgerfunktion.
Der Stützring 5 enthält zur Stabilisierung der Kammerwände 10, 11 sich axial erstreckende Sprossen 13.1, 13.2; 13.3, 13.4; ..., die die Kammerwände 10, 11 in einzelne Feder unterteilen. Mit Hilfe der Dicke der Kammerwände 10, 11 und der Lage der Sprossen 13.1, 13.2; 13.3, 13.4; ... und damit der Geometrie der Tilgerkanäle 20,1, 20.2, werden die Tilgerfrequenzen eingestellt. Die in Fig. 4 gezeigte Hydrobuchse hat über ihren Umfang verteilt die beiden Kammerwände 10, 11, wobei jede der Kammerwände 10, 11 jeweils in zwei Teil-Kammerwände 10.1,10.2; 11.1; 11.2 unterteilt ist, von denen immer je zwei 10.1, 11.1; 10.2, 11.2 funktionstechnisch parallel arbeiten, um die Tilgerwirkung zu erhöhen. Die in Umfangsrichtung 12 am weitesten von der Arbeitskammer 6 entfernt liegenden Teil-Kammerwände 10.2, 11.2 wirken zusammen mit einem längeren Tilgerkanal 20.2 bei niedrigeren Frequenzen.
Die Teil-Kammerwände 10.1, 11.1, die sich an den Federkörper 4 anschließen und einen kurzen Tilgerkanal 20.1 erzeugen, wirken dann bei höheren Frequenzen und vermeiden Verhärtungen, die aus dem zweiten Tilgerkanal 9 bei niedrigen Frequenzen herrühren.
Der Stützring 5 weist in Umfangsrichtung 12 verteilte, ebenfalls mit umfangsseitigem Abstand zueinander benachbart angeordnet Sprossen 13.1, 13.2; 13.3, 13.4; ... auf, wobei sich jede Teil-Kammerwand 10.1, 10.2; 11.1, 11.2; ... zwischen in Umfangsrichtung 12 zueinander benachbart angeordneten und jeweils in axialer Richtung erstreckenden Sprossen 13.1, 13.2; 13.3, 13.4; .... erstreckt und mit diesen verbunden ist.

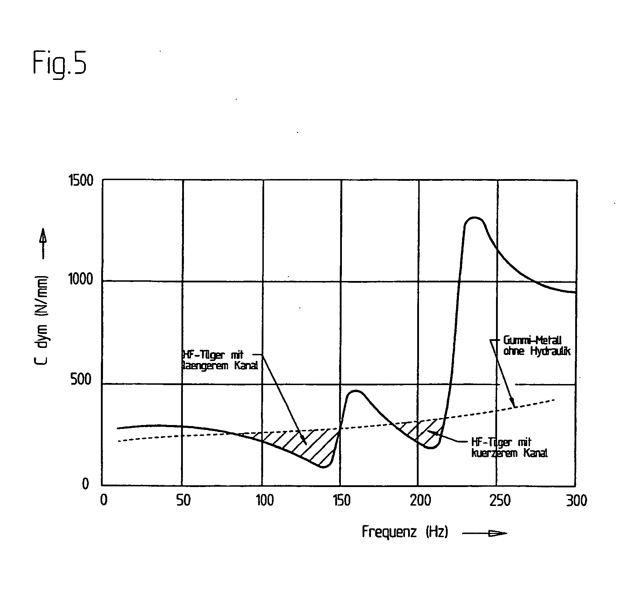

In Fig. 5 ist eine Kennung der Hydrobuchse aus Fig. 4 gezeigt, wobei die dynamische Federrate über der Frequenz aufgetragen ist. Durch die funktionstechnische Parallelschaltung der beiden Tilger 8, 9 ergeben sich zwei Absenkungen der dynamischen Federrate; die vergleichsweise tieffrequentere Absenkung der dynamischen Federrate erfolgt, wenn die Teil-Kammerwände 10.2, 11.2 des zweiten Tilgers 9 in Funktion sind; die etwas höherfrequente Absenkung der dynamischen Federrate erfolgt demgegenüber, wenn die in Richtung der Arbeitskammer 6 angeordneten Teil-Kammerwände 10.1, 11.1 des ersten Tilger 8 in Funktion sind.

Werden die beiden Kammerwände durch eine größere Anzahl von Sprossen 13.1, 13.2; 13.3, 13.4; ... des Stützrings 5 unterteilt, können weitere Tilgereffekte erzeugt werden, unter anderem auch Tilgereffekte zu höheren Frequenzen hin verschoben werden.

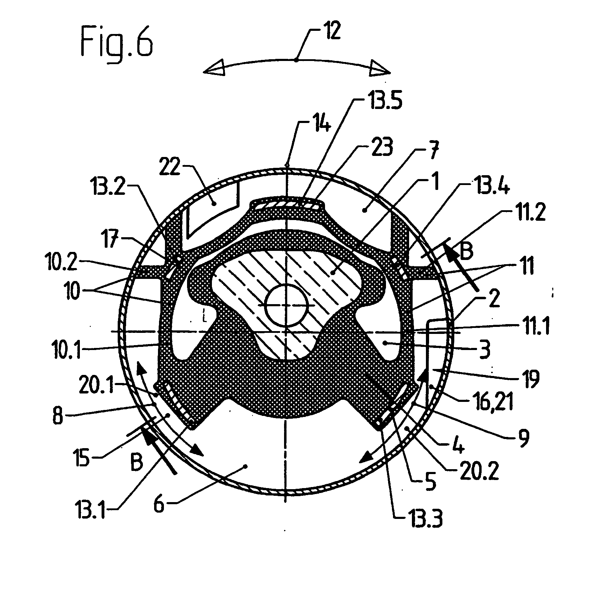

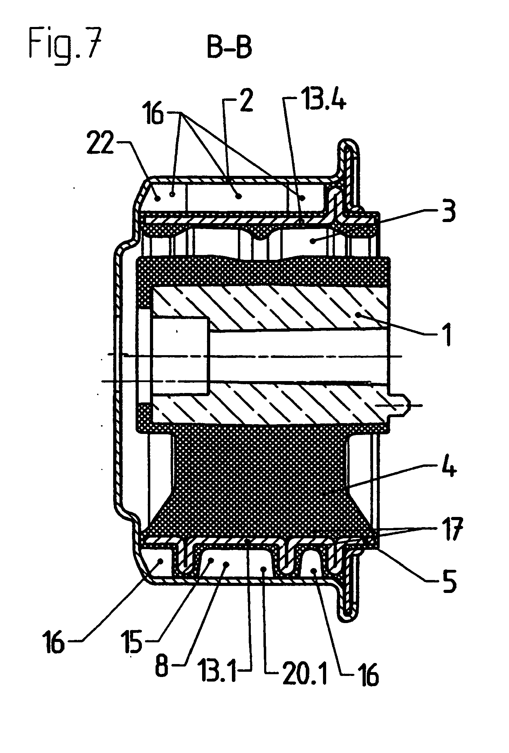

In den Fig. 6 und 7 ist ein drittes Ausführungsbeispiel einer Hydrobuchse mit zwei Tilgern 8, 9 gezeigt. Außerdem umfasst die gezeigte Hydrobuchse einen Dämpfer 19, der einen langen Dämpfungskanal 16 umfasst.
Werden beispielsweise in einem Fahrzeug sowohl Dämpfungs- als Tilgungsfunktionen durch Verwendung einer Hydrobuchse benötigt, kann es vorkommen, dass der übliche lange Dämpfungskanal 16, der sich einmal rund um die Hydrobuchse erstreckt, nicht hinreichend Dämpfung bei einer Frequenz liefern kann. Der Grund dafür können die hydraulischen Tilgersysteme 8,9 sein, Fluid vom geförderten Volumen der Arbeitskammer 6 abzweigen. In einem solchen Fall müssen sowohl Länge als auch Querschnitt des Dämpfungskanals 16 verlängert werden. Dies kann beispielsweise dadurch erreicht werden, dass der Dämpfungskanal 16 sowohl den Umfang der Hydrobuchse an beiden stirnseitigen Ende nutzt, wobei die Verbindung von Arbeits- 6 und Ausgleichskammer 7 über die sich axial erstreckenden Sprossen erfolgt. Dadurch, dass die Sprossen 13.1, 13.2; 13.3, 13.4; ... , wie hier dargestellt, vom elastomeren Werkstoff des Federkörpers 4 und der Kammerwände 10, 11 umschlossen sind, kann nicht nur eine einfache und kostengünstige Herstellung der Hydrobuchse erreicht werden, sondern durch die Abstimmung der Elastizität der Kammerwände 10, 11 können eine Verbreiterung des Frequenzbandes des Dämpfers oder weitere nutzbare Eigenformen, die mit den Tilgerbereichen zusammenwirken, erzielt werden. Außerdem bieten die elastischen Kanalwände 10.2 und 11.2 die Möglichkeit, bei harten Einfederungen, zum Beispiel beim Überfahren von Bordsteinkanten, den Druck durch Verformen der Kammerwände 10, 11, so dass ein Ventil entsteht, nach oben zu begrenzen. Der erste Tilger 8 ist in diesem Beispiel wieder als Leerlauftilger ausgebildet, wobei die Kammerwand 10 in zwei Teil-Kammerwände 10.1, 10.2 unterteilt ist, die elastisch nachgiebig ausgebildet sind. Der Leerlauftilgerkanal ist auch in diesem Ausführungsbeispiel mit Bezugszeichen 15 versehen. Der zweite Tilger 9 ist um die gedachte Radialebene 14 gespiegelt zum ersten Tilger 8 angeordnet, wobei der sich in axialer Richtung erstreckende Kanalabschnitt durch zwei elastische Teil-Kammerwände (11.1, 11.2) begrenzt ist. Die sich in axialer Richtung erstreckenden Kanalabschnitte haben drei Funktionen. Sie begrenzen die Kammern, die einen Leerlauf- oder Hochfrequenztilger bewirken, je nach Dimensionierung der Kammerwände und Kanalabschnitte, wobei zwei Systeme parallel arbeiten können. Es ist aber durch unterschiedliche Dimensionierung auch eine Leerlauf- und ein Hochfrequenztilger möglich. Außerdem verbinden die axial verlaufenden Abschnitte die an den Stirnseiten angeordneten, in Umfangsrichtung verlaufenden Kanalabschnitte, um einen extrem langen Dämpfungskanal zu erhalten. Dieses ist dann besonders wichtig, wenn die Buchse relativ kleine Abmessungen aufweist, so dass ein relativ hartes Elastomer verwendet werden muss, um die schwingungstechnisch notwendigen statischen Eigenschaften zu erreichen. Damit werden gleichzeitig die für die Dämpfung notwendigen Bläheigenschaften so verschoben, dass ein langer Kanal notwendig wird. Die axial verlaufenden Abschnitte haben außerdem die Funktion eines Überdruckventils, wenn bei extremen Stoßbelastungen auf die Arbeitskammer ein Platzen der Blähfederwände der Tilger verhindert werden soll.

Im dargestellten Beispiel fördert die Arbeitskammer 6 in jeweils einen als hydraulischen Tilger 8, 9 ausgebildeten Tilger-Kanal (20.1, 20.2). Die entsprechenden Kammerwände 10, 11 werden auf Tilgung vergleichsweise blähhart abgestimmt. An einen der beiden Tilger 8 kann beispielsweise der Dämpfungskanal 16 mit seiner Kanalöffnung 21 angeschlossen werden; der lange Dämpfungskanal 16 mündet in die Ausgleichskammer 7. Diese Ausgleichskammer 7 besitzt, wie üblich, eine sehr flexible Begrenzungswand, um quasi drucklos aus der Arbeitskammer 6 verdrängtes Volumen aufnehmen zu können.

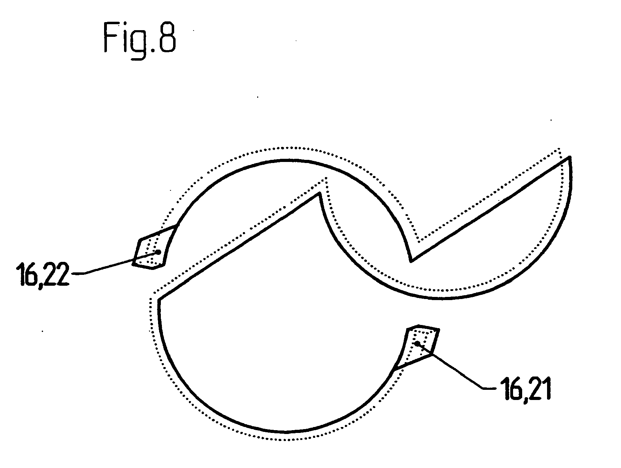

Die Erstreckung des Dämpfungskanals 16 ist in Fig. 8 dargestellt. Der Dämpfungskanal 16 erstreckt sich zwischen Arbeits-6 und Ausgleichskammer 7 und weist eine Länge auf, die der Summe aus 1,5-fachem Umfang und 2-facher axialer Länge der Hydrobuchse entspricht.

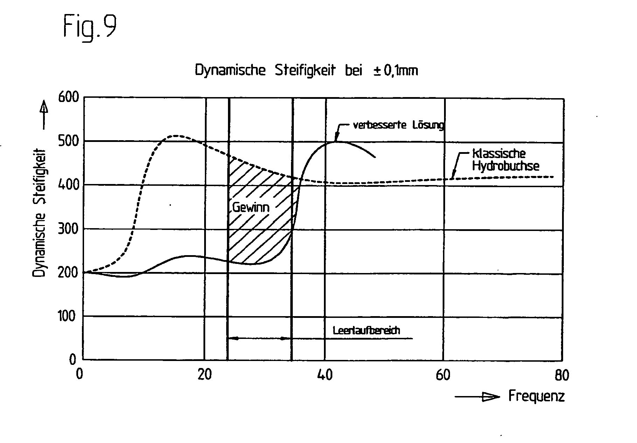

In Fig. 9 ist eine Kennlinie gezeigt, bei der die dynamische Steifigkeit der Hydrobuchse aus den Fig. 6 bis 8 über der Frequenz aufgetragen ist. Im Leerlaufbereich zwischen 25 und 30 Hz ergibt sich, bezogen auf klassische Hydrobuchsen, eine Halbierung der dynamischen Steifigkeit. Gleichzeitig erreicht man eine sehr breitbandige Dämpfung, wobei durch die Volumenaufnahme der elastischen Kammerwände 10, 11 zwangsläufig etwas Dämpfung verloren geht. Je höher frequent die Tilger abgestimmt werden, desto geringer die Elastizität und die Volumenaufnahme der Kammerwände 10, 11, so dass der Dämpfungsverlust bei einer Hochfrequenzabstimmung vernachlässigbar gering ist und nur im Bereich von Fertigungstoleranzen liegt.

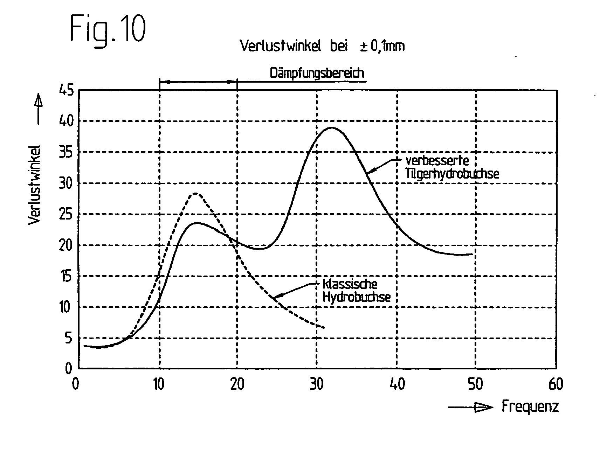

Der Verlustwinkel über der Frequenz ist in Fig. 10 gezeigt.

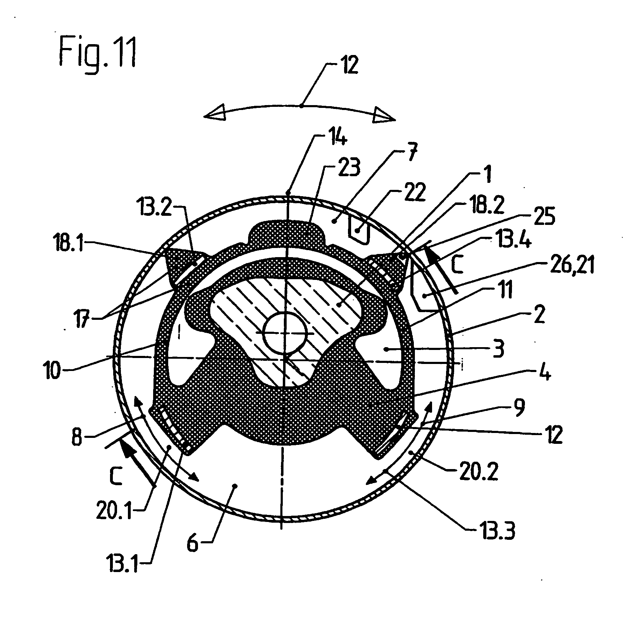

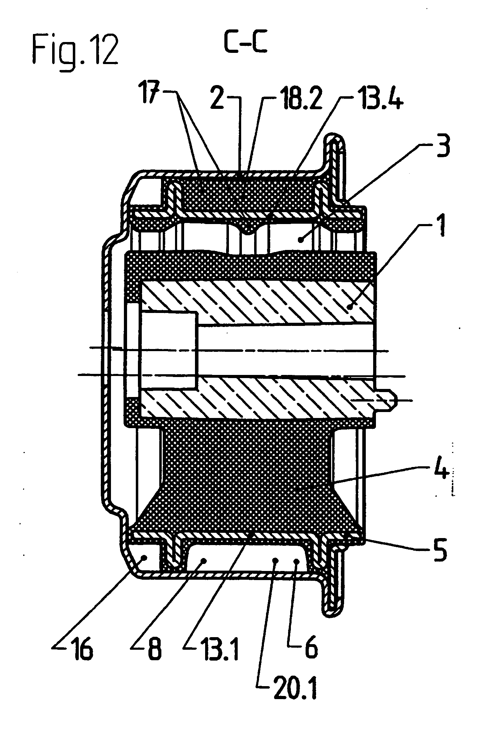

In den Fig. 11 und 12 ist ein viertes Ausführungsbeispiel einer Hydrobuchse gezeigt, Die hier dargestellte Hydrobuchse eignet sich ebenfalls zur Tilgung von höherfrequenten Brumm-Geräuschen. Die Kammerwände 10, 11 sind dabei vergleichsweise blähhärter auszuführen. Gleichzeitig verbessert sich damit auch die Dämpfung des Dämpfers 19. Der Verbindungskanal 26 zwischen der Arbeitskammer 6 und der Ausgleichskammer 7 ist in dem hier gezeigten Ausführungsbeispiel nicht als Dämpfungskanal 16 ausgebildet, sondern dient nur dem Volumenausgleich bei statischer Belastung der Hydrobuchse. Statt des hier dargestellten Verbindungskanals 26 kann auch eine kleine Aussparung im Schott 18.2 vorgesehen sein, die die Verbindung zwischen Arbeitskammer 6 und Ausgleichskammer 7 herstellt. In dem hier gezeigten Ausführungsbeispiel sind die beiden Tilger 8, 9 wieder in einer funktionstechnischen Parallelschaltung angeordnet, wie auch im Ausführungsbeispiel Fig. 4 gezeigt und beschrieben. Die Kammerwände 10, 11 der hydraulischen Tilger 8, 9 sind einander funktionstechnisch parallel geschaltet. Die Ausgleichskammer 7 erstreckt sich in Umfangsrichtung 12 zwischen dem ersten und dem zweiten Schott 18.1, 18.2 und ist sehr elastisch ausgebildet.

Die hier gezeigte Hydrobuchse gelangt in Fahrzeugen zur Anwendung, bei denen nicht notwendigerweise Dämpfung zur Verbesserung des Fahrkomfort benötigt wird, jedoch Tilgung zwischen 3000 min⁻¹ und 6000⁻¹, was etwa 100 bis 200 Hz bei Schwingungen zweiter Ordnung entspricht.

Die Hydrobuchse hat einen einfachen Aufbau und ist daher in großen Stückzahlen kostengünstig herstellbar.

Die Arbeitskammer 6 ist strömungsleitend mit den beiden Tilgern 8, 9 verbunden, wobei die beiden Tilger 8, 9 jeweils einen Tilgerkanal 20.1, 20.2 aufweisen und durch eine elastisch nachgiebige Kammerwand 10, 11 begrenzt sind. Die beiden Tilger 8, 9 sind im Wesentlichen gleich ausgeführt, wobei durch ihr gleichzeitiges Wirken die dynamische Federrate besonders gut abgesenkt wird.

Beide Tilger 8, 9 sind in Umfangsrichtung 12 durch jeweils ein Schott 18.1, 18.2 begrenzt. Hinter den Schotts (18,1, 18.2) liegt 180° zur Arbeitskammer 6 versetzt, der Ausgleichsraum 7. Der Verbindungskanal 26, der den zweiten Tilger 9 mit der Ausgleichskammer 7 verbindet, sorgt für den Volumenausgleich bei quasi statischer Belastung und großen einmaligen, aber langsamen Bewegungen. Dieser Verbindungskanal 26 kann beispielsweise durch eine kleine Bypassöffnung 25 von z.B. 2 bis 4 mm² Querschnitt im Schott 18.2 ersetzt werden. Dann kann die Breite des langen Kanals 16 den Tilgern 8, 9 zugefügt werden, so dass deren Querschnitte größer werden und damit die erreichbare Tilgerfrequenz steigt und die Wirkung besser an hohe Frequenzen angepasst wird.

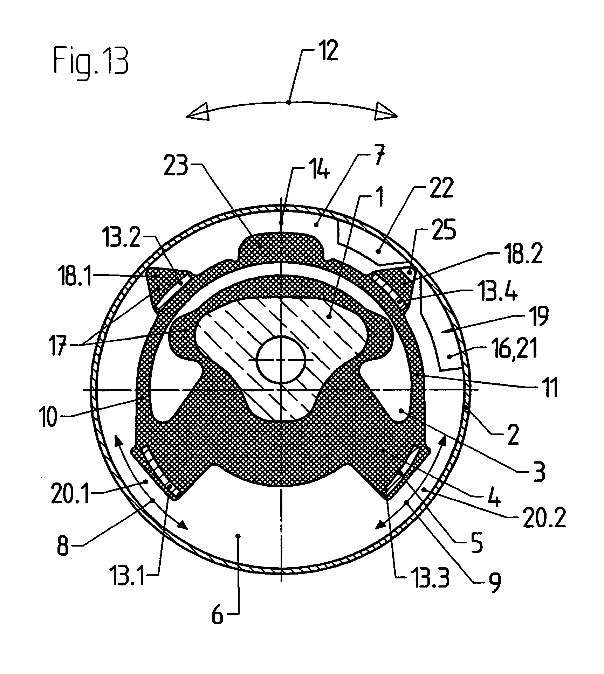

In Fig. 13 ist ein fünftes Ausführungsbeispiel gezeigt, das im Wesentlichen dem Ausführungsbeispiel aus den Fig. 11 und 12 entspricht. Die hier gezeigte Hydrobuchse ist mit zwei parallel wirkenden Tilgern 8, 9 ausgeführt, weist aber zusätzlich einen langen Dämpfungskanal 16 auf. Der klassische Fall, Motoren in kleineren PKW zu lagern, bedeutet Dämpfen der Hub-Nickbewegungen der Aggregate (Stuckern), Isolieren von Motorkörperschall und - in letzter Zeit zunehmend - auch Tilgen von Hochfrequenz-Brummen, wie zuvor beschrieben.

Dafür bietet sich die Konstruktion mit Arbeitsraum 6, Dämpfungskanal 16 und Ausgleichsraum 7 an, der 180° gegenüber der Arbeitskammer 6 versetzt angeordnet ist. Die Kanalöffnungen 21, 22 des Dämpfungskanals 16 begrenzen einen vergleichsweise langen Dämpfungskanal 16. Damit kann die Lagerung besonders weich und niederfrequent abgestimmt werden, was einen besonders guten Kompromiss zwischen Fahrkomfort einerseits und Akustik andererseits ergibt. Die beiden Tilger 8, 9 zur Unterdrückung von Hochfrequenz-Brummen liegen, in Umfangsrichtung 12 betrachtet, symmetrisch zur Radialebene 14, rechts und links der Arbeitskammer 6, wobei die FluidStrömung die Anbindung des Federkörpers 4 am Stützring 5 umströmt. Die beiden parallel wirkenden Tilger 8, 9 erzeugen dabei eine bessere Wirkung als ein einzelnes Tilger-System, wobei blähharte flexible Kammerwände 10, 11 bevorzugt verwendet werden, was die Dämpfung erhöht, da nicht so viel Flüssigkeit aus dem Dämpfungssystem 19 mit dem langen Dämpfungskanal 16 in den Tilgerkanälen 20.1, 20.2 verloren geht.

## Patentansprüche

1. Hydrobuchse, umfassend einen inneren Stützköper (1), der von einem äußeren Stützköper (2) mit radialem Abstand umschlossen ist, wobei in dem durch den Abstand gebildeten Spalt (3) ein Federkörper (4) aus elastomerem Werkstoff angeordnet ist, der radial innenseitig mit dem inneren Stützköper (1) und radial außenseitig mit einem Stützring (5) verbunden ist, wobei der Federkörper (4) radial außenseitig mittels des Stützrings (5) am äußeren Stützköper (2) festgelegt ist, wobei die Hydrobuchse zumindest eine mit Flüssigkeit gefüllte und teilweise vom Federkörper (4) begrenzte Arbeitskammer (6) umfasst, die flüssigkeitsleitend mit zumindest einer mit Flüssigkeit gefüllten Ausgleichskammer (7) verbunden ist, wobei die Hydrobuchse zumindest zwei hydraulische Tilger (8, 9) umfasst, wobei jeder der Tilger (8, 9) zumindest eine schwingfähige Kammerwand (10, 11) und einen Tilgerkanal (20.1, 20.2) aufweist, und wobei die Kammerwände (10, 11) symmetrisch zu einer den inneren Stützköper (1) zentrisch und radial durchschneidenden, gedachten Radialebene (14) angeordnet sind, wobei die flüssigkeitsleitende Verbindung zwischen Arbeits- (6) und Ausgleichskammer (7) als Dämpfungskanal (16) ausgebildet ist, **dadurch gekennzeichnet, dass** der Dämpfungskanal (16) zwischen Arbeits- (6) und Ausgleichskammer (7) eine Länge aufweist, die der Summe aus 1, 5-fachem Umfang und zweifacher axialer Länge der Hydrobuchse entspricht, und dass die Tilger (8, 9) von der Arbeitskammer (6) direkt angetrieben werden.

2. Hydrobuchse nach einem der Anspruch 1, **dadurch gekennzeichnet, dass** die Tilger (8, 9) in einer funktionstechnischen Parallelschaltung angeordnet sind.

3. Hydrobuchse nach Anspruch 1, **dadurch gekennzeichnet, dass** die Tilger (8, 9) in einer funktionstechnischen Reihenschaltung angeordnet sind.

4. Hydrobuchse nach einem der Ansprüche 2 bis 3, **dadurch gekennzeichnet, dass** der Stützring (5) in Umfangsrichtung (12) verteilte, jeweils mit umfangsseitigem Abstand zueinander benachbart angeordnete, sich jeweils in axialer Richtung erstreckende Sprossen (13.1, 13.2; 13.3, 13.4; ...) aufweist und dass sich jede der schwingfähigen Kammerwände (10, 11) zwischen in Umfangsrichtung (12) zueinander benachbart angeordneten Sprossen (13.1, 13.2; 13.3, 13.4; ...) erstreckt und mit diesen verbunden ist.

5. Hydrobuchse nach einem der Ansprüche 2 bis 4, **dadurch gekennzeichnet, dass** sich die Kammerwände (10, 11) in Umfangsrichtung (12) mit radialem Abstand im Wesentlichen konzentrisch zum äußeren Stützköper (2) erstrecken.

6. Hydrobuchse nach einem der Ansprüche 4 oder 5, **dadurch gekennzeichnet, dass** radial zwischen einer der Sprossen (13.1, 13.2; 13.3, 13.4; ...) und dem äußeren Stützköper (2) ein sich im Wesentlichen in Umfangsrichtung (12) erstreckender, im Querschnitt betrachtet, schlaufenförmiger Tilgerkanal (20.1) angeordnet ist, der als Leerlauftilgerkanal (15) ausgebildet ist.

7. Hydrobuchse nach einem der Ansprüche 1 bis 6, **dadurch gekennzeichnet, dass** der Federkörper (4) und die Kammerwände (10, 11) einstückig und materialeinheitlich ausgebildet sind.

8. Hydrobuchse nach einem der Ansprüche 1 bis 7, **dadurch gekennzeichnet, dass** das Material von Federkörper (4) und Kammerwänden (10, 11) den inneren Stützköper (1) und den Stützring (5) mit seinen Sprossen (13.1, 13.2; 13.3, 13.4; ...) vollständig ummanteln.

9. Hydrobuchse nach Anspruch 8, **dadurch gekennzeichnet, dass** die Ummantelung (17) zumindest einer Sprosse (13.1, 13.2; 13.3, 13.4; ...) ein Schott (18, 18.1, 18.2) bildet, zur räumlichen Begrenzung von zumindest einem der Tilger (8, 9) in Umfangsrichtung (12).

## Claims

1. Hydraulic bushing, comprising an inner supporting body (1) which is surrounded with a radial spacing by an outer supporting body (2), wherein a spring body (4) made of elastomeric material is arranged in the gap (3) formed by the spacing and is connected radially on the inside to the inner supporting body (1) and radially on the outside to a supporting ring (5), wherein the spring body (4) is fixed radially on the outside to the outer supporting body (2) by means of the supporting ring (5), wherein the hydraulic bushing comprises at least one working chamber (6) which is filled with fluid and partially delimited by the spring body (4) and is connected in a fluid-conducting manner to at least one compensating chamber (7) filled with fluid, wherein the hydraulic bushing comprises at least two hydraulic vibration absorbers (8, 9), wherein each of the vibration absorbers (8, 9) has at least one chamber wall (10, 11) that is able to vibrate and a vibration absorbing channel (20.1, 20.2), and wherein the chamber walls (10, 11) are arranged symmetrically with respect to an imaginary radial plane (14) intersecting the inner supporting body (1) centrally and radially, and wherein the fluid-conducting connection between the working chamber (6) and the compensating chamber (7) is formed as a damping channel (16), **characterized in that** the damping channel (16) between the working chamber (6) and the compensating chamber (7) has a length which corresponds to the sum of 1.5 times the circumference and two times the axial length of the hydraulic bushing, and **in that** the vibration absorbers (8, 9) are driven directly by the working chamber (6).

2. Hydraulic bushing according to Claim 1, **characterized in that** the vibration absorbers (8, 9) are arranged in a functional parallel connection.

3. Hydraulic bushing according to Claim 1, **characterized in that** the vibration absorbers (8, 9) are arranged in a functional series connection.

4. Hydraulic bushing according to either of Claims 2 and 3, **characterized in that** the supporting ring (5) has ridges (13.1, 13.2; 13.3, 13.4; etc.) distributed in the circumferential direction (12), arranged adjacent to one another in each case with a circumferential spacing and extending in each case in the axial direction, and **in that** each of the chamber walls (10, 11) that are able to vibrate extends between and is connected to ridges (13.1, 13.2; 13.3, 13.4; etc.) arranged adjacent to one another in the circumferential direction (12).

5. Hydraulic bushing according to one of Claims 2 to 4, **characterized in that** the chamber walls (10, 11) extend substantially concentrically with respect to the outer supporting body (2) with a radial spacing in the circumferential direction (12).

6. Hydraulic bushing according to either of Claims 4 and 5, **characterized in that** a vibration absorbing channel (20.1) which extends substantially in the circumferential direction (12) and has the form of a loop as seen in cross section is arranged radially between one of the ridges (13.1, 13.2; 13.3, 13.4; etc.) and the outer supporting body (2) and is formed as an idling vibration absorbing channel (15).

7. Hydraulic bushing according to one of Claims 1 to 6, **characterized in that** the spring body (4) and the chamber walls (10, 11) are formed in one piece and from one material.

8. Hydraulic bushing according to one of Claims 1 to 7, **characterized in that** the material of the spring body (4) and the chamber walls (10, 11) completely encloses the inner supporting body (1) and the supporting ring (5) with its ridges (13.1, 13.2; 13.3, 13.4; etc.).

9. Hydraulic bushing according to Claim 8, **characterized in that** the enclosure (17) of at least one ridge (13.1, 13.2; 13.3, 13.4; etc.) forms a bulkhead (18, 18.1, 18.2) in order to spatially delimit at least one of the vibration absorbers (8, 9) in the circumferential direction (12).

## Revendications

1. Manchon à amortissement hydraulique, comprenant un corps d'appui (1) intérieur entouré par un corps d'appui (2) extérieur avec une certaine distance radiale, un corps de ressort (4) en matériau élastomère étant disposé dans la fente (3) formée par cette distance, ledit corps étant relié, sur le côté intérieur dans le plan radial, au corps d'appui (1) intérieur et, sur le côté extérieur dans le plan radial, à une bague d'appui (5), le corps de ressort (4) étant fixé fixement, sur le côté extérieur dans le plan radial, au corps d'appui (2) extérieur à l'aide de la bague d'appui (5), le manchon à amortissement hydraulique comprenant au moins une chambre de travail (6) remplie de liquide et en partie délimitée par le corps de ressort (4) qui est reliée de façon conductrice de liquide à au moins une chambre d'égalisation (7) remplie de liquide, le manchon à amortissement hydraulique comprenant au moins deux amortisseurs (8, 9) hydrauliques, chacun des amortisseurs (8, 9) comportant au moins une paroi de chambre (10, 11) pouvant osciller et un canal d'amortisseur (20.1, 20.2) et les parois de chambre (10, 11) étant disposées de façon symétrique par rapport à un plan radial (14) imaginaire traversant de façon radiale le corps d'appui (1) intérieur et centrée sur lui, la jonction conductrice de liquide étant réalisée entre la chambre de travail (6) et la chambre d'égalisation (7) sous la forme d'un canal d'amortissement (16), **caractérisé en ce que** le canal d'amortissement (16) présente une longueur entre la chambre de travail (6) et la chambre d'égalisation (7) qui correspond à la somme de 1,5 fois le périmètre et deux fois la longueur axiale du manchon à amortissement hydraulique et que les amortisseurs (8, 9) sont entraînés directement par la chambre de travail (6).

2. Manchon à amortissement hydraulique selon la revendication 1, **caractérisé en ce que** les amortisseurs (8, 9) sont disposés en fonctionnement dans un circuit en parallèle.

3. Manchon à amortissement hydraulique selon la revendication 1, **caractérisé en ce que** les amortisseurs (8, 9) sont disposés en fonctionnement dans un circuit en série.

4. Manchon à amortissement hydraulique selon l'une quelconque des revendications 2 à 3, **caractérisé en ce que** la bague d'appui (5) présente respectivement des croisillons (13.1, 13.2 ; 13.3, 13.4 ; ...) répartis dans la direction circonférentielle (12), disposés côte à côte à une certaine distance périphérique les uns des autres, s'étendant respectivement dans la direction axiale et que chacune des parois de chambre (10, 11) pouvant osciller s'étend entre des croisillons (13.1, 13.2 ; 13.3, 13.4 ; ...) disposés côte à côte dans la direction circonférentielle (12) et peut être reliée à eux.

5. Manchon à amortissement hydraulique selon l'une quelconque des revendications 2 à 4, **caractérisé en ce que** les parois de chambre (10, 11) s'étendent pour l'essentiel concentriquement par rapport au corps d'appui (2) extérieur dans la direction circonférentielle (12), à une certaine distance axiale de celui-ci.

6. Manchon à amortissement hydraulique selon l'une quelconque des revendications 4 ou 5, **caractérisé en ce qu'**un canal d'amortisseur (20.1) s'étendant pour l'essentiel dans la direction circonférentielle (12) et prenant une forme de boucle en coupe transversale est disposé dans le plan radial entre un des croisillons (13.1, 13.2 ; 13.3, 13.4 ; ...) et le corps d'appui (2) extérieur, ledit canal prenant la forme d'un canal d'amortisseur (15) à vide.

7. Manchon à amortissement hydraulique selon l'une quelconque des revendications 1 à 6, **caractérisé en ce que** le corps de ressort (4) et les parois de chambre (10, 11) sont réalisés d'un seul tenant et avec une certaine unité de matière.

8. Manchon à amortissement hydraulique selon l'une quelconque des revendications 1 à 7, **caractérisé en ce que** le matériau du corps de ressort (4) et des parois de chambre (10, 11) revêt entièrement le corps d'appui intérieur (1) et la bague d'appui (5) ainsi que ses croisillons (13.1, 13.2 ; 13.3, 13.4 ; ...).

9. Manchon à amortissement hydraulique selon la revendication 8, **caractérisé en ce que** le revêtement (17) d'au moins un croisillon (13.1, 13.2 ; 13.3, 13.4 ; ...) forme une cloison étanche (18, 18.1, 18.2) pour délimiter dans l'espace au moins un des amortisseurs (8, 9) dans la direction circonférentielle (12).
